# DEMANDE DE BREVET EUROPEEN

(11) **EP 1 110 881 A1**
(43) Date de publication de la demande: **27.06.2001**
(21) Numéro de dépôt: 00403490.6
(22) Date de dépôt: 12.12.2000
(51) Int. Cl.: B65G 1/08

(54) **Installation de stockage dynamique à déblocage de charges**

(30) Priorité: 16.12.1999 FR 9915897
(71) Demandeur: Société Vitréenne d'Abattage, 35500 Vitre (FR)
(72) Inventeur: Allix, Bruno, 35139 La Guerche de Bretagne (FR)
(74) Mandataire: Nicolle, Olivier

(57) **Abrégé**

L'installation de stockage dynamique est du type comprenant une pluralité de rampes gravitaires (3), légèrement inclinées sur l'horizontale, rangées en matrice de n lignes horizontales et m colonnes verticales, et destinées à servir de plan de stockage pour des charges (7). Elle comprend un dispositif de déblocage (40), mobile en déplacement horizontal et vertical, et apte à débloquer des rampes choisies ; des moyens de détection propres à détecter une rampe dans laquelle une charge est bloquée ; et un poste de commande (30) propres à commander le déplacement horizontal et vertical du dispositif de déblocage (40) devant ladite rampe ainsi détectée, et à commander le dispositif de déblocage (40) afin de débloquer la charge immobilisée sur ladite rampe.

## Description

La présente invention se rapporte à une installation de stockage dynamique à déblocage de charges.

Elle trouve une application dans le stockage dynamique d'articles, pièces ou analogues, issus par exemple d'un site de production industrielle ou d'abattage d'animaux.

De manière connue, une installation de stockage dynamique est constituée d'une pluralité de rampes gravitaires légèrement inclinées sur l'horizontale et rangées en matrice de n lignes horizontales et m colonnes verticales. Chaque rampe porte des éléments de roulement transversaux, tels que des galets ou rouleaux, montés fous en rotation. En pratique, la génératrice supérieure des éléments de roulement des rampes définit un plan de stockage pour des charges qui peuvent être des bacs, palettes, ou colis.

Du fait de la déclivité du plan de stockage, le chemin de roulement permet le convoyage des charges par simple gravité. La charge qui se situe au niveau de l'extrémité basse de la rampe est en appui contre une butée d'arrêt.

Dans ce genre d'installation, il arrive parfois que les charges restent bloquées sur le chemin de roulement. Ces problèmes surviennent notamment lorsque la pente n'est pas suffisante pour l'entraînement par gravité des charges stockées ou lorsque les charges sont insuffisamment rigides.

Une solution connue consiste à augmenter la pente. Mais cela réduit d'autant le nombre de rampes et par conséquent la capacité de stockage pour un même volume de stockage. De plus, cela peut engendrer davantage de chutes ou des déformations des charges en appui sur la butée d'arrêt.

Une autre solution connue consiste à aménager des galets moteurs sur les rampes afin d'engendrer une impulsion sur les charges et ainsi les débloquer.

Toutefois, cette dernière solution n'est pas non plus totalement satisfaisante puisqu'elle requière l'aménagement de tels galets pour toutes les rampes, ce qui rend onéreuse et complexe la mise en oeuvre d'une telle solution, comme d'ailleurs toutes les solutions connues ne traitant qu'une rampe.

La présente invention remédie à ces inconvénients.

Elle porte sur une installation de stockage dynamique du type comprenant une pluralité de rampes gravitaires légèrement inclinées sur l'horizontale, rangées en matrice de n lignes horizontales et m colonnes verticales, et destinées à servir de plan de stockage pour des charges.

Selon une définition générale de l'invention, l'installation comprend:
- un dispositif de déblocage, mobile en déplacement horizontal et vertical, et apte à débloquer des charges,
- des moyens de détection propres à détecter une rampe dans laquelle une charge est bloquée ; et
- un poste de commande propres à commander le déplacement horizontal et vertical du dispositif de déblocage devant ladite rampe ainsi détectée, et à commander le dispositif de déblocage afin de débloquer la charge immobilisée sur ladite rampe.

Dans un mode de réalisation préféré dans lequel l'installation est du type comprenant au moins un transstockeur mobile en déplacement horizontal et vertical, le poste de commande est apte selon l'invention à :
a) déplacer le transstockeur jusqu'à un emplacement d'attente prédéterminé dans lequel se trouve le dispositif de déblocage,
- b) commander le transstockeur pour prendre le dispositif de déblocage et déplacer le transstockeur ainsi chargé dudit emplacement d'attente jusqu'à la rampe détectée,
- c) commander le dispositif de déblocage pour débloquer la rampe,
- d) après déblocage, déplacer le transstockeur contenant le dispositif de déblocage de la rampe jusqu'à l'emplacement d'attente, et
- e) laisser ledit dispositif de déblocage à l'emplacement d'attente.

En pratique, le dispositif de déblocage comprend un caisson propre à contenir une masse, un filin reliant la masse au caisson, des moyens formant organe de poussée aptes à propulser la masse hors du caisson, des moyens d'enroulement du filin d'une position déroulée dans laquelle la masse est hors du caisson vers une position enroulée dans laquelle la masse est placée dans le caisson, et des moyens de commande propres en réponse à des ordres prédéterminés à commander les moyens formant organe de poussée et les moyens d'enroulement du filin.

La présente invention a également pour objet un dispositif de déblocage pour une installation de stockage dynamique du type précité.

La présente invention a encore pour objet un procédé de déblocage de charges susceptible d'être mise en oeuvre dans une installation de stockage dynamique du type précité.

D'autres caractéristiques et avantages de l'invention apparaîtront à la lumière de la description détaillée ci-après et des dessins dans lesquels :
- la figure 1 est une vue en coupe d'une installation de stockage dynamique de l'art antérieur ;
- la figure 2 est une vue de dessus d'une installation de stockage dynamique équipée d'un dispositif de déblocage selon l'invention ;
- la figure 3 est une vue en plan schématique du dispositif de déblocage selon l'invention ;
- la figure 4 est une vue de côté du dispositif de déblocage selon l'invention ;
- la figure 5 est une vue de dessus de la masse du dispositif de déblocage selon l'invention ;
- la figure 6 est une vue en bout du dispositif de déblocage selon l'invention ;
- la figure 7 est une vue en bout du dispositif de la figure 6 sans glissière masse et poussoir ; et
- la figure 8 est un GRAFCET illustrant le fonctionnement du dispositif de déblocage selon l'invention.

Les dessins comportent des éléments de caractère certain. A ce titre, ils peuvent servir non seulement à illustrer la description mais aussi à contribuer le cas échéant à la définition de l'invention.

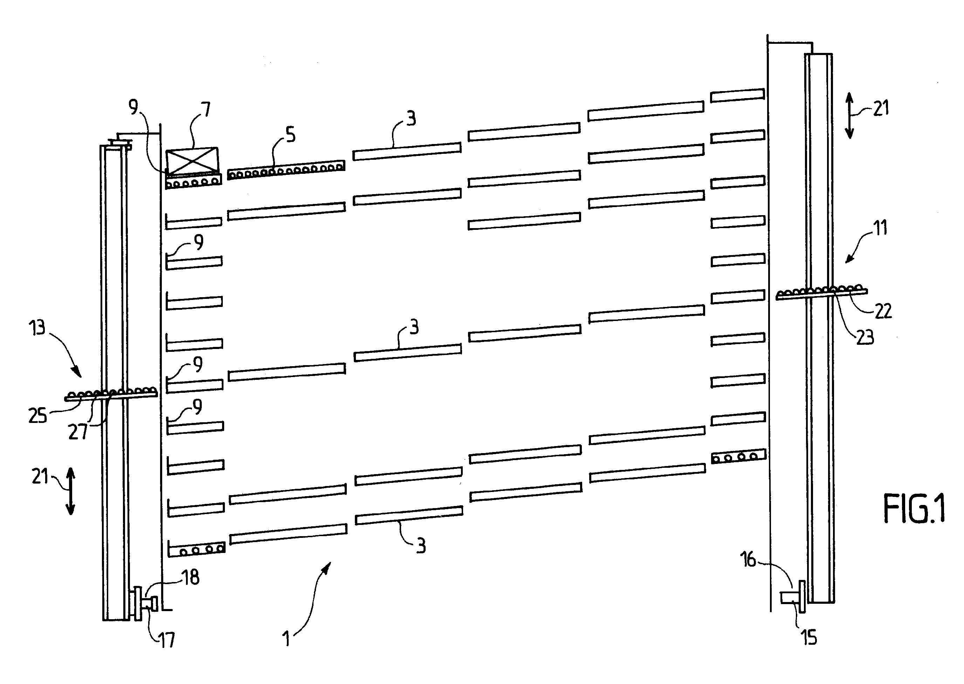

En référence aux figures 1 à 3, on a représenté une installation de stockage dynamique 1 selon l'invention. L'installation 1 comprend une pluralité de rampes gravitaires 3 légèrement inclinées sur l'horizontale et rangées en matrice de n lignes horizontales et m colonnes verticales.

Chaque rampe 3 porte des éléments de roulement 5 transversaux, tels que des galets ou rouleaux, montés fous en rotation. En pratique, la génératrice supérieure des éléments de roulement 5 des rampes 3 définit un plan de stockage pour des charges 7 qui peuvent être des bacs, palettes, ou colis.

Du fait de la déclivité du plan de stockage, le chemin de roulement permet le convoyage des charges 7 par simple gravité.

La charge 7 qui se situe au niveau de l'extrémité basse de la rampe est en appui contre une butée d'arrêt 9.

L'introduction des charges s'effectue par un transstockeur d'introduction 11 tandis que l'extraction des charges est réalisée par un transstockeur d'extraction 13.

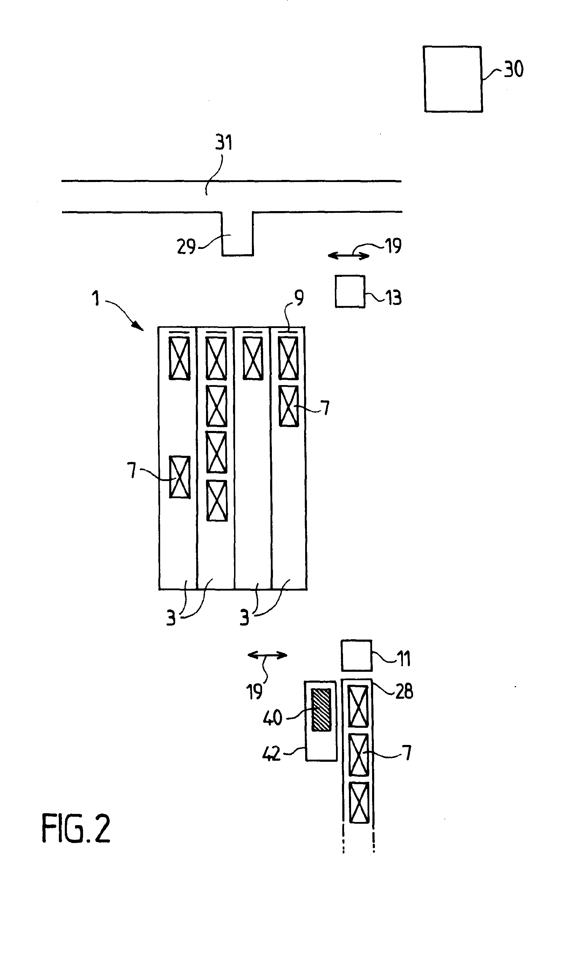

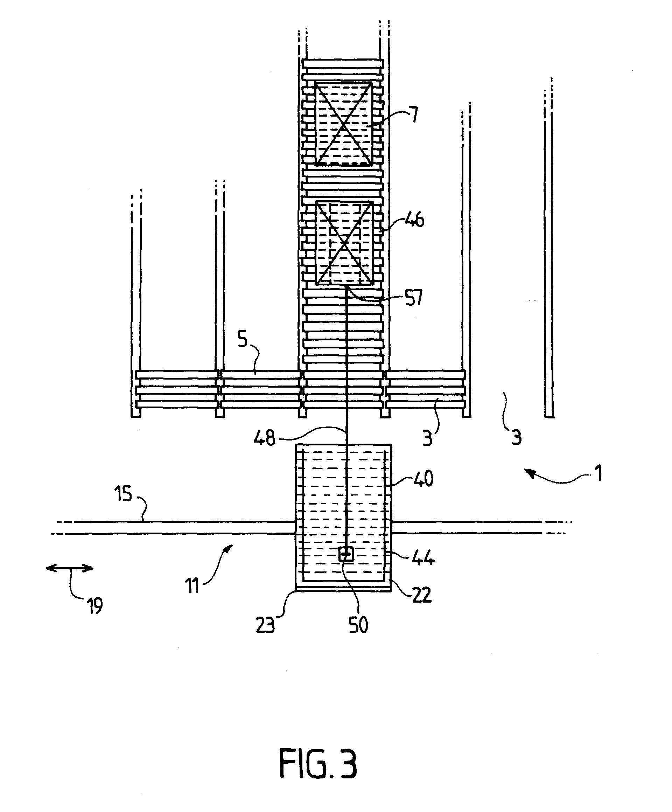

Les transstockeurs 11 et 13 comprennent respectivement des ensembles 15 et 17, mobiles horizontalement (flèche 19, figures 2 et 3) devant les différentes rampes. Les ensembles 15 et 17 comprennent par exemple des rails 16 et 18 s'étendant transversalement par rapport aux rampes (c'est-à-dire parallèlement aux rouleaux 5). Les ensembles 15 et 17 comprennent également des moyens moteurs (non représentés) propres à déplacer les transstockeurs le long des rails 16 et 18.

Les transstockeurs 11 et 13 comportent en outre respectivement des nacelles introductrice 23 et extractrice 25 qui sont solidaires des ensembles 15 et 17 et mobiles verticalement (flèche 21, figure 1) pour pouvoir venir se placer sélectivement devant les différentes rampes et en introduire ou extraire les charges 7.

Le nacelle extractrice 25 est par exemple dotée de rouleaux motorisés 27. La nacelle 25 se place devant une rampe 3 en regard d'une première charge 7 qui se trouve en butée 9. La nacelle 25 est équipée d'un doigt (non représenté) qui vient abaisser la butée 9 de sorte que la première charge 7 roule par gravité jusqu'aux rouleaux 27 de la nacelle 25. La butée 9, lorqu'elle est abaissée pour la première charge 7, bloque la charge 7 suivante. Le transstockeur 13 associé à la nacelle extractrice 25 achemine ensuite la charge 7 sur un poste de sortie 29, généralement équipé d'une bande de convoyage 31.

De son côté, la nacelle introductrice 23 associée au transstockeur 15 est par exemple dotée de rouleaux motorisés 22. Cette nacelle 23 prend une première charge 7 du poste d'entrée 28 et la dépose sur les rouleaux 22 de la nacelle 23. Le transstockeur 11 achemine ensuite la charge 7 devant la rampe sélectionnée selon son adresse en X (horizontalement) et en Y (verticalement). Une fois positionné devant la rampe sélectionnée, le transfert de la charge dans la rampe correspondante est réalisé à l'aide des rouleaux motorisés de la nacelle 23.

Il est prévu en outre un poste de commande 30 de type poste de commande pour automate programmable qui pilote les déplacements des transstockeurs 11 et 13 à l'aide d'un adressage des rampes en X et Y.

En référence à la figure 2, un dispositif de déblocage 40 de charge selon l'invention requiert un emplacement d'attente ou "gare" 42 disposé à proximité du poste d'entrée 28.

Des moyens de détection (non représentés) sont prévus au niveau de la nacelle 25.

Par exemple, en l'absence de charge à proximité de la butée d'arrêt 9, le poste de commande 30 en déduit qu'une charge est immobilisée dans la rampe correspondante.

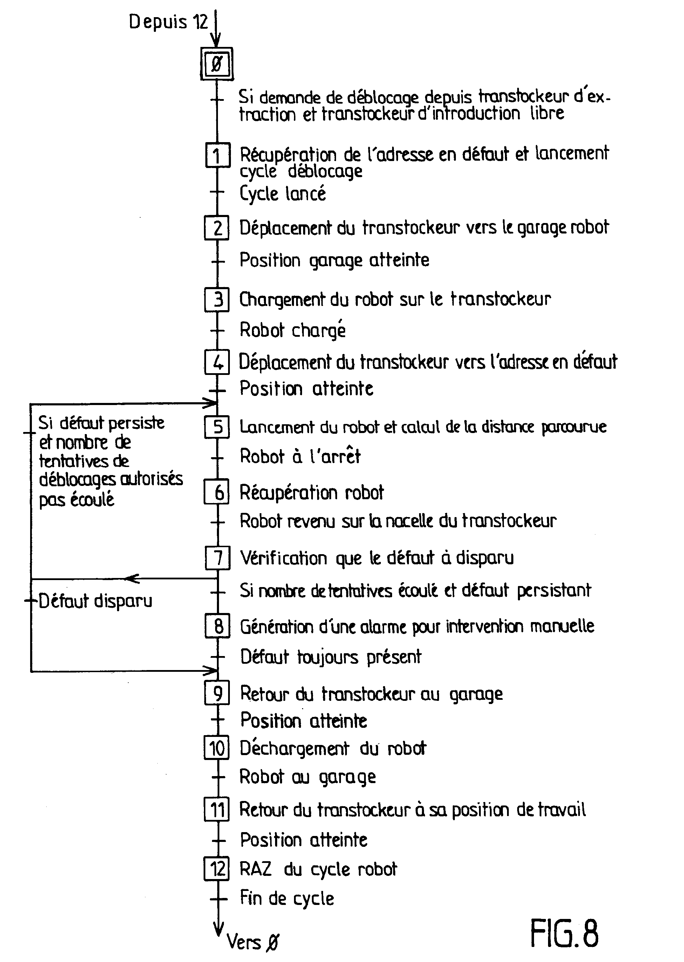

En réponse à la détection d'une charge bloquant une rampe, le poste de commande 30 lance un cycle de déblocage selon l'invention dont un GRAFCET est décrit en référence à la figure 8, que l'on décrira plus en détail ci-après.

En référence aux figures 3 à 7, le dispositif de déblocage selon l'invention comprend un caisson 44 au format d'une charge et propre à contenir une masse 46.

Un filin 48 relie la masse 46 au caisson 44. Le filin 48 est par exemple une courroie plate ou une tresse en nylon.

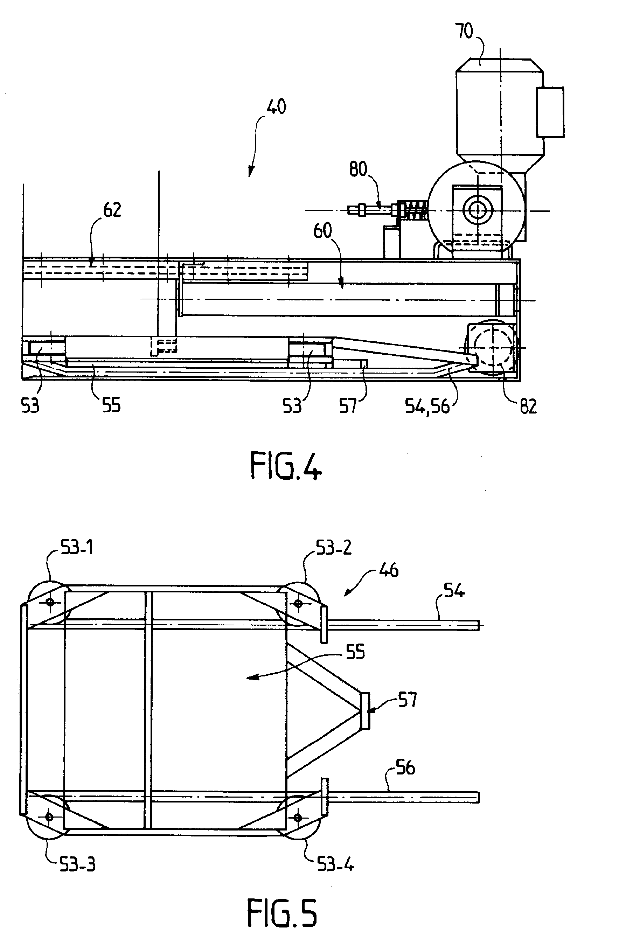

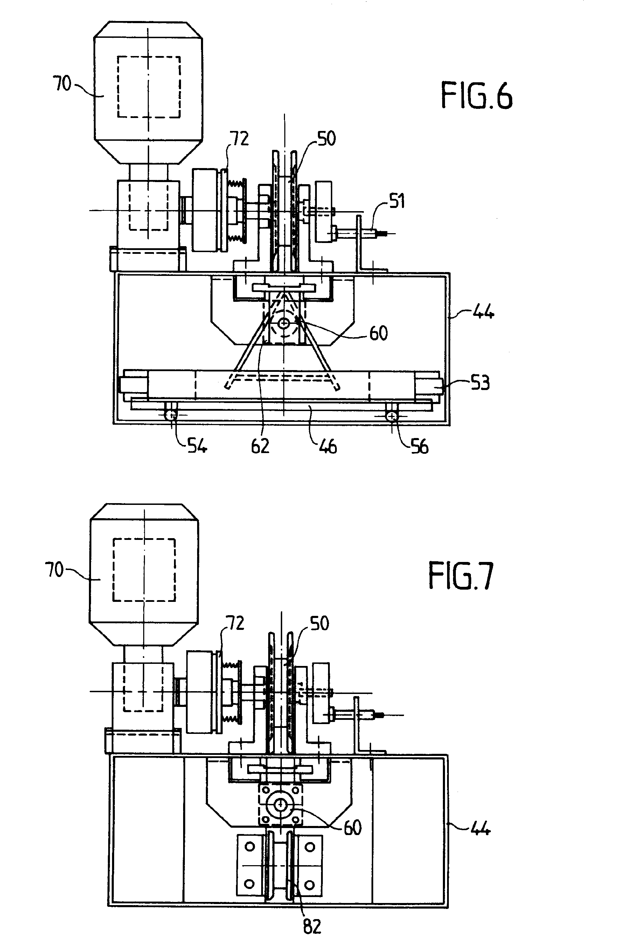

Le filin 48 est apte à être entre une position enroulée dans laquelle la masse 46 est placée dans le caisson 44 (comme représenté en référence aux figures 4 et 6) et une position déroulée dans laquelle la masse 46 est lancée hors du caisson 44 (comme représenté en figure 3).

Par exemple, les dimensions du caisson 44 sont de l'ordre de 800 x 200 x 430mm.

En référence à la figure 5, la masse 46 est équipée de deux skis 54 et 56 et de quatre ronds de glissement 53 destinés à améliorer le roulement de la masse 46 sur les rouleaux des rampes. Les deux skis sont espacés l'un de l'autre d'une distance extérieure de 415mm. Ces skis sont reliés l'un à l'autre par une plaque 55 en aluminium.

L'une des extrémités du filin est solidaire de la masse à l'aide d'une fixation 57 tandis que l'autre extrémité du filin est reliée au caisson.

L'autre extrémité du filin est fixée sur le corps d'une poulie 50. Sur l'arbre de la poulie 50 est avantageusement fixé un codeur 51 qui mesure la longueur du filin dévidé.

Un organe de poussée, par exemple un vérin de poussée 60 est prévu pour propulser la masse 46 hors du caisson. Des glissières 62 permettent de guider longitudinalement le vérin de poussée 60. La course du vérin de poussée est par exemple de 184mm.

L'entraînement de la poulie sur laquelle est enroulé le filin est réalisé par des moyens moteur disposés sur la partie supérieure du caisson.

Ces moyens comprennent un moteur de type motoréducteur 70 et des moyens d'embrayage 72 reliant la poulie 50 au moteur 70.

En pratique, le vérin de poussée 60 propulse la masse 46 hors du caisson et le filin 48 se déroule de la poulie. La poulie 50 tourne folle lors du défilement du filin car l'embrayage n'est pas actif, le moteur 70 étant à l'arrêt.

Lorsque le codeur 51 ne mesure plus rien, cela signifie que la masse 46 est arrêtée. En rendant actif l'embrayage et en démarrant le moteur, la poulie 50 tourne et remonte la masse en enroulant le filin.

Un vérin de blocage 80 est prévu pour bloquer le filin dans sa position enroulée, c'est à-dire la position correspondant à la masse 46 en position de repos dans le caisson 44.

Une poulie de renvoi 82 est également prévue entre la poulie 50 et la fixation 57.

Le dispositif de déblocage est télécommandé, et alimenté (électricité de puissance, air comprimé) par une connectique appropriée.

On fait maintenant référence au GRAFCET de la figure 8 qui illustre le fonctionnement du dispositif de déblocage selon l'invention.

Le cycle de déblocage est initialisé à l'étape 0.

Par exemple, lorsqu'une absence de charge 7 en butée 9 est détectée, une demande de déblocage est émise depuis le transstockeur d'extraction 13. Ensuite, il est vérifié que le transstockeur d'introduction 11 est libre. Si ces conditions sont vérifiées, le cycle passe à l'étape 1. Pendant le cycle de déblocage, le transtockeur d'introduction est rendu indisponible pour le poste de commande 30.

A l'étape 1, l'adresse en X et Y de la rampe bloquée est récupérée, le cycle de déblocage est ensuite lancé et le cycle passe à l'étape 2.

A l'étape 2, le transstockeur d'introduction 11 est déplacé vers l'emplacement d'attente 42 (garage robot) du dispositif de déblocage 40 (robot).

Lorsque la position du garage 42 est atteinte, le cycle passe à l'étape 3.

A l'étape 3, le robot 40 est chargé sur le plateau 22 du dispositif introducteur 25 associé au transstockeur d'introduction 11.

Lorsque le robot est chargé sur le transstockeur d'introduction 11, le cycle passe à l'étape 4.

A l'étape 4, le transstockeur 11 se déplace vers l'adresse en défaut.

Lorsque la position de l'adresse en défaut est atteinte, le cycle passe à l'étape 5.

A l'étape 5, le robot est lancé, c'est-à-dire que la masse est lancée hors du caisson par l'intermédiaire de l'organe de poussée 60.

Avantageusement, la distance parcourue par le filin est calculée (codeur 51).

Lorsque le robot (la masse) est à l'arrêt, le cycle passe à l'étape 6.

A l'étape 6, le robot est récupéré. (les moyens d'enroulement sont mis en position d'enroulement, la masse est ainsi récupérée).

Lorsque le robot est récupéré, le cycle passe à l'étape 7.

A l'étape 7, il est vérifié si le défaut a disparu.

Si le défaut persiste et si le nombre de tentatives de déblocage autorisé n'est pas écoulé, le cycle reprend à l'étape 5, décrite ci-avant.

Si le nombre de tentatives est écoulé et si le défaut persiste, le cycle passe à l'étape 8.

Si le défaut a disparu, le cycle passe à l'étape 9.

A l'étape 8, il est généré une alarme pour une intervention manuelle et le cycle passe ensuite à l'étape 9.

A l'étape 9, le transstockeur d'introduction 11 se déplace du rayonnage XY vers l'emplacement d'attente 42.

Si la position de l'emplacement d'attente 42 est atteinte, le cycle passe à l'étape 10.

A l'étape 10, le robot est déchargé du transstockeur d'introduction 11.

Lorsque le robot est laissé à son emplacement d'attente, le cycle passe à l'étape 11.

A l'étape 11, le transstockeur 11 se déplace vers sa position de travail.

Lorsque la position de travail est atteinte, le cycle passe à l'étape 12 dans laquelle le cycle de déblocage est remis à zéro.

## Revendications

1. Installation de stockage dynamique, du type comprenant une pluralité de rampes gravitaires (3), légèrement inclinées sur l'horizontale, rangées en matrice de n lignes horizontales et m colonnes verticales, et destinées à servir de plan de stockage pour des charges (7), caractérisée en ce qu'elle comprend :
- un dispositif de déblocage (40), mobile en déplacement horizontal et vertical, et apte à débloquer des rampes choisies,
- des moyens de détection propres à détecter une rampe dans laquelle une charge est bloquée ; et
- un poste de commande (30) propres à commander le déplacement horizontal et vertical du dispositif de déblocage (40) devant ladite rampe ainsi détectée, et à commander le dispositif de déblocage (40) afin de débloquer la charge immobilisée sur ladite rampe.

2. Installation selon la revendication 1, du type comprenant au moins un transstockeur (11) mobile en déplacement horizontal et vertical, et apte à introduire ou extraire des charges sur les rampes, caractérisée en ce que le poste de commande (30) est apte à :
a) déplacer le transstockeur (11) jusqu'à un emplacement d'attente prédéterminé (42) dans lequel se trouve le dispositif de déblocage (40),
- b) commander le transstockeur (11) pour prendre le dispositif de déblocage (40) et déplacer le transstockeur (11) ainsi chargé dudit emplacement d'attente (42) jusqu'à la rampe détectée (3),
- c) commander le dispositif de déblocage (40) pour débloquer la rampe (3),
- d) après déblocage, déplacer le transstockeur (11) contenant le dispositif de déblocage de la rampe (3) jusqu'à l'emplacement d'attente (42), et
- e) laisser ledit dispositif de déblocage (40) à l'emplacement d'attente (42)

3. Installation selon la revendication 1, caractérisée en ce que le dispositif de déblocage (40) comprend :
- un caisson (44) propre à contenir une masse (46) ;
- un filin (48) reliant la masse (46) au caisson (44) ;
- des moyens formant organe de poussée (60) propres à propulser la masse hors du caisson ;
- des moyens d'enroulement (70, 72, 50) du filin (48) d'une position déroulée dans laquelle la masse est hors du caisson vers une position enroulée dans laquelle la masse est placée dans le caisson, et
- des moyens de commande propres en réponse à des ordres prédéterminés à commander les moyens formant organe de poussée (60) et les moyens d'enroulement (70, 72, 50) du filin.

4. Installation selon les revendications 2 et 3, caractérisée en ce que le poste de commande (30) est apte à commander le lancement de la masse (46), et après déblocage, à ramener la masse en position enroulée.

5. Dispositif de déblocage de charges pour une installation de stockage dynamique du type comprenant une pluralité de rampes gravitaires (3), légèrement inclinées sur l'horizontale, rangées en matrice de n lignes horizontales et m colonnes verticales, et destinées à servir de plan de stockage pour des charges (7), caractérisé en ce qu'il comprend un caisson (44) propre à contenir une masse (46), un filin (48) reliant la masse (46) au caisson (44), des moyens formant organe de poussée (60) propres à propulser la masse (46) hors du caisson (44), des moyens d'enroulement (70, 72, 50) du filin (48) d'une position déroulée dans laquelle la masse est lancée hors du caisson vers une position enroulée dans laquelle la masse est placée dans le caisson, et des moyens de commande propres en réponse à des ordres prédéterminés à commander les moyens formant organe de poussée (60) et les moyens d'enroulement (70, 72, 50) du filin.

6. Procédé de déblocage de charges destiné à être mis en oeuvre dans une installation du type comprenant une pluralité de rampes gravitaires (3), légèrement inclinées sur l'horizontale, rangées en matrice de n lignes horizontales et m colonnes verticales, et destinées à servir de plan de stockage pour des charges (7), et au moins un transstockeur (11) mobile en déplacement horizontal et vertical, et apte à introduire ou extraire des charges sur les rampes, caractérisé en ce qu'il comprend les étapes suivantes:
- a) déplacer le transstockeur (11) jusqu'à un emplacement d'attente prédéterminé (42) dans lequel se trouve le dispositif de déblocage (40),
- b) commander le transstockeur (11) pour prendre le dispositif de déblocage (40) et déplacer le transstockeur (11) ainsi chargé dudit emplacement d'attente (42) jusqu'à la rampe détectée (3),
- c) commander le dispositif de déblocage (40) pour débloquer la rampe (3),
- d) après déblocage, déplacer le transstockeur (11) contenant le dispositif de déblocage de la rampe (3) jusqu'à l'emplacement d'attente (42), et
- e) laisser ledit dispositif de déblocage (40) à l'emplacement d'attente (42).
